**Europäisches Patentamt**

**European Patent Office**

**Office européen des brevets**

(19)

(11) Veröffentlichungsnummer: **0 096 382**
**B1**

(12) **EUROPÄISCHE PATENTSCHRIFT**

(45) Veröffentlichungstag der Patentschrift:
23.09.87

(51) Int. Cl.⁴: **C 10 G 47/26,** C 10 G 47/12,
B 01 J 21/18

(21) Anmeldenummer: **83105491.1**

(22) Anmeldetag: **03.06.83**

(54) **Verfahren zur Hydrierung von Schweröl, Bitumen und dergl.**

(30) Priorität: **05.06.82 DE 3221411**

(43) Veröffentlichungstag der Anmeldung:
**21.12.83 Patentblatt 83/51**

(45) Bekanntmachung des Hinweises auf die Patenterteilung:
**23.09.87 Patentblatt 87/39**

(84) Benannte Vertragsstaaten:
**BE DE FR GB IT NL SE**

(56) Entgegenhaltungen:
**EP-A-0 073 527**
**EP-A-0 073 690**
**CA-A-1 117 887**
**DE-A-3 029 639**
**US-A-4 204 943**

**W. KRÖNIG: "Die Katalytische Druckhydrierung
von Kohlen, Teeren und Mineralölen".
BERLIN/GÖTTINGEN/HEIDELBERG 1950 Seiten 77-83**

(73) Patentinhaber: **VEBA OEL Entwicklungs-
Gesellschaft mbH, Alexander- von- Humboldt-
Strasse, D-4650 Gelsenkirchen 2 (DE)**

(72) Erfinder: **Graeser, Ulrich, Dr., Friedrich- Ludwig-
Jahn- Strasse 5, D-4358 Haltern (DE)**
Erfinder: **Niemann, Klaus, Dr.,
Walsumermarkstrasse 92, D-4200 Oberhausen (DE)**

(74) Vertreter: **Lindner, Wolfgang, Dr., Alexander- von-
Humboldt- Strasse Postfach 20 10 45, D-4650
Gelsenkirchen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 096 382 B1

## Beschreibung

Die Erfindung bezieht sich auf den Einsatz von porösen, kohlenstoffhaltigen Einwegkatalysatoren, insbesondere Rußen aus der Schwerölvergasung, in die Sumpf- oder kombinierte Sumpf- und Gasphasenhydrierung von Schweröl, Bitumen und ähnlichen Ausgangsprodukten, wie Rückständen der Top- und Vakuumdestillation von Rohöl.

Es ist zum Beispiel aus W. Krönig ""Die katalytische Druckhydrierung von Kohlen, Teeren und Mineralölen", Berlin/Göttingen/Heidelberg 1950, S. 79, bekannt, daß Schweröle, Bitumen sowie andere Rückstände sich in leicht siedende Kohlenwasserstoffgemische umwandeln lassen, indem man sie mit Wasserstoff und einem auf ein Kohlegerüst verteilten Katalysator, gegebenenfalls auch mit einem aus dem Produkt stammenden Rückführöl mischt und diese Mischung beim Druck von 5 000 bis 70 000 kPa, vorzugsweise 10 000 bis 32 500 kPa in einem Erhitzer auf 200 bis 500° C, vorzugsweise 350 bis 450° C erhitzt. Nach Durchlaufen eines Vorheizers wird die Mischung von unten durch ein Reaktorsystem geführt, in dem bei Temperaturen zwischen 250 und 550 °C, vorzugsweise 380 bis 480° C Hydrocrackreaktionen ablaufen, die zu einer Spaltung großer Moleküle sowie zu deren partieller Entschwefelung, Denitrifizierung und Entoxigenierung führen.

Vom Kopf des Reaktorssytems gelangt die Reaktionsmischung in einen Heißabscheider, der auch aus einem System von mehreren in Serie geschalteten Abscheidern bestehen kann, und bei Temperaturen betrieben wird, die bis zu 100° C, vorzugsweise 20 bis 40° C unterhalb der Reaktionstemperatur liegen. Vom Kopf des Heißabscheiders werden gas- und dampfförmig Reaktionsprodukte, vom Fuß des Heißabscheiders nicht umgesetztes Einsatzmaterial, Asphaltene, Katalysatoren sowie ein gewisser Schwer- und Mittelölanteil als Heißabschlamm abgezogen. Durch geeignete Maßnahmen, z. B. durch Zentrifugieren, Destillieren oder Extrahieren kann aus diesem Heißabschlamm weiteres Hydrierschweröl durch Abtrennen vom Hydrierrückstand gewonnen werden.

Die am Kopf des Heißabscheiders abgezogenen gas- bzw. dampfförmigen Produkte werden entweder in einem Kaltentspannungssystem abgeregelt und der weiteren Verarbeitung zugeführt oder unter Reaktionsdruck auf kurzem Weg von oben in ein System von Reaktoren geleitet, in denen die gas- bzw. dampfförmigen Produkte an Festbettkatalysatoren weiterentschwefelt, denitrifiziert, entoxigeniert sowie gespalten werden (vgl. W. Urban "Erdölverarbeitung in der Scholvener 300 at-Kombi-Hydrierkammer" in Erdöl und Kohle, 8 (1955), S. 780 - 782). Auch die Produkte dieses "Combi-Cracking" werden über ein Kaltabscheidersystem abgeregelt und der Weiterverarbeitung zugeführt.

Es ist bekannt, für die Hydrierung von Schweröl und Bitumen in der Sumpfphase Einwegkatalysatoren einzusetzen, die auf einem Träger, wie aktiver Kohle oder insbesondere Koks katalytisch wirksame Metallverbindungen zum Beispiel von Wolfram, Molybdän, Blei, Zinn, Chrom, Kobalt und Nickel, insbesondere von Eisen enthalten. Diese Katalysatoren werden in Mengen bis 10 Gew.-%, bezogen auf das Einsatzprodukt, insbesondere 1 bis 6 Gew.-% eingesetzt. Als besonders wirksam haben sich Eisenverbindungen, die unter den Reaktionsbedingungen in Eisensulfid übergehen, wie Eisensulfat in Mengen von 2 bis 7 Gew.-% auf aktiver Kohle oder Koks erwiesen.

Dokument EP-A-73 690 beschreibt ein Verfahren zur Hydrierung von Schweröl bei Temperaturen zwischen 380 und 480° C und Drücken zwischen 2 500 und 25 000 kPa in Gegenwart eines auch 1,0 bis 10,0 Gew.-% einer katalytisch wirkenden Metallverbindung enthaltenden kohlenstoffhaltigen Katalysators, wobei der Kohlenstoffanteil des Katalysators Ruß einer Schwerölverbrennung ist.

Erfindungsgemäß lassen sich die oben beschriebenen Einwegkatalysatoren durch Adsorbentien substituieren, die aus den Rußen gewonnen werden, die bei der Vergasung bzw. Teilverbrennung von flüssigen und/oder festen Brennstoffen anfallen. Als Einsatz in eine solche Vergasung bzw. Teilverbrennung kommen neben den in Raffinerien oder petrochemischen Werken anfallenden Öle oder ölhaltige Rückstände bzw. Extrakten aus Kohle, Schiefer und Sand insbesondere der bei der oben beschriebenen Hydrierung anfallende Rückstand oder auch der gesamte Heißschlamm ohne vorherige Abtrennung des Hydrierschweröls in Frage.

Bei der Vergasung bzw. Teilverbrennung dieser Stoffe entsteht Ruß, der verfahrensbedingt aus dem Gasstrom mit Wasser ausgewaschen wird. Diese Rußwässer bilden dauerhafte Suspensionen. Es ist möglich, z. B. nach dem in DE-OS 26 54 235 beschriebenen Verfahren, daraus durch Zugabe von Öl Rußagglomerate zu erzeugen, die sich leicht vom Öl/Wasser separieren lassen und mit verschiedenen Medien, wie z. B. CO, $CO_2$ oder $H_2O$ bei hohen Temperaturen zu aktivieren sind. Spezifische Oberflächen von > 600 m²/g sind leicht zu erzielen.

Die erfindungsmäßigen Einwegkatalysatoren können aufgrund ihrer großen inneren Oberfläche die bei der Sumpfphasenhydrierung entstehenden Kokspartikel adsorptiv binden. Dadurch wird einem Verkrusten des Reaktorsystems weitgehend vorgebeugt und somit eine wesentliche Verfahrensverbesserung erreicht. Der beladene Einwegkatalysator wird über das Heißabscheidersystem ausgeschleust und mit dem Heißabschlamm oder dem übrigen Hydrierrückstand der Entsorgung, insbesondere ineiner Vergasungs- bzw. Teilverbrennungsanlage zugeführt. Durch diese Rückführung des den Einwegkatalysator enthaltenden Heißabschlammes werden in den Rußpellet die aus dem Öl stammenden Schwermetalle, insbesondere die katalytisch aktiven Komponenten Vanadium und Nickel angereichert, wodurch eine verbesserte Produktraffination erzielt wird.

In speziellen Fällen kann es nötig sein, die Katalysatoraktivität weiter zu erhöhen, indem die Ruße mit Salzen eines oder mehrerer katalytisch aktiver Metalle getränkt werden. Als katalytisch aktiv sind die Metalle der I. bis VIII. Nebengruppe sowieder IV. Hauptgruppe des Periodischen Systems der Elemente, vorzugsweise Titan, Chrom, Eisen, Kobalt, Nickel, Zink, Zinn und Blei anzusehen. Die Ruße sollten vorzugsweise mit 0,1 bis 10 Gew.% Metall beladen werden. Dies kann gleichzeitig mit der Aktivierung der Rußpellets geschehen.

## Beispiel

In einem senkrecht stehenden Rohrreaktor von 4,5 l Inhalt wurden 4,0 kg/h eines Rückstandes der Vakuumdestillation von Arabian-Light-Rohöl mit 3 Nm$^3$h Wasserstoff bei 450°C und 28 000 kPa (280 bar) hydriert. In Versuch I wurde kein Katalysator, in Versuch II 5 Gew.% getrocknete Rußpellets aus der Schwerölvergasung als Einwegkatalysator eingesetzt. Die nachfolgende Tabelle zeigt, daß bei Einsatz des Einwegkatalysators die Rückstandskonversion und der Asphaltenabbau verstärkt werden sowie eine Verschiebung des Produktspektrums in Richtung der gewünschten leichten Produkte beobachtet wird.

|  | Versuch I | Versuch II |
|---|---|---|
| Ausbeute (Gew.% vom Einsatz) | | |
| Gase | 5,9 | 7,6 |
| Benzin | 11,0 | 14,0 |
| Mitteldestillat | 18,2 | 23,4 |
| Vakuumgasöl | 21,0 | 21,3 |
| Rückstand > 500°C | 43,9 | 33,7 |
| Konversion (%) | 55 | 65 |
| Asphaltenabbau | 80 | 95 |

## Patentansprüche

1. Verfahren zur Hydrierung von Schweröl, Bitumen oder dergl. bei Temperaturen zwischen 250 und 550°C, vorzugsweise zwischen 380 und 480°C und Drücken zwischen 5 000 und 70 000 kPa, vorzugsweise zwischen 10 000 und 32 500 kPa, in Gegenwart von 0,1 bis 10 Gew.-% eines gegebenenfalls katalytisch wirkendes Metallsalz enthaltenden kohlenstoffhaltigen Einwegkatalysators in einer Sumpf- oder kombinierten Sumpf- und Gasphasenhydrierung und Auftrennung in einem Heißabscheider oder einem System von mehreren in Serie geschalteten Abscheidern, in gas- und dampfförmige Reaktionsprodukte sowie nicht umgesetztes Einsatzmaterial, Asphaltene, Katalysatoren, die mit einem gewissen Schwer- und Mittelölanteil als Heißabschlamm abgeschieden werden bei Temperaturen bis 100°C, vorzugsweise 20 bis 40°C unterhalb der Reaktionstemperatur, dadurch gekennzeichnet, daß als Katalysatoren Ruße einer Schwerölvergasung oder Teilverbrennung verwendet werden.

2. Verfahren nach Anspruch 1, dadurch gekennzeichnet, daß die Ruße aus der Vergasung oder Teilverbrennung des bei der Hydrierung anfallenden Rückstandes gewonnen werden.

3. Verfahren nach Anspruch 1, dadurch gekennzeichnet, daß die Ruße bei der Vergasung oder Teilverbrennung des Heißabschlammes gewonnen werden.

4. Verfahren nach einem der Ansprüche 1 bis 3, dadurch gekennzeichnet, daß die Ruße z. B. mit CO, CO$_2$, H$_2$O bei Temperaturen oberhalb 200°C aktiviert werden.

5. Verfahren nach einem der Ansprüche 1 bis 4, dadurch gekennzeichnet, daß die Ruße als katalytisch wirksame Metallverbindungen solche von einem oder mehreren der Elemente Titan, Chrom, Eisen, Kobalt, Nickel, Zink, Zinn und Blei enthalten.

6. Verfahren nach einem der Ansprüche 1 bis 5, dadurch gekennzeichnet, daß die Ruße 0,1 bis 10 Gew.-% an Metallverbindungen enthalten.

## Claims

1. Process for hydrogenating heavy oil, bitumen or the like at temperatures between 250 and 550°C, preferably between 380 and 480°C, and pressures between 5,000 and 70,000 kPa, preferably between 10,000 and 32,500 kPa, in the presence of 0.1 to 10 % by weight of a carbon-containing disposable catalyst, which optionally contains catalytically active metal salt, in a bottom phase hydrogenation or combined bottom phase and gas-phase hydrogenation, and separation, in a hot separator or a system of a plurality of separators connected in series, into gaseous and vapour-form reaction products as well as unconverted starting material, asphaltenes and catalysts, which, together with a certain proportion of heavy oil and medium oil, are separated off as hot waste sludge, at temperatures up to 100°C, preferably 20 to 40°C, below the reaction temperature, characterized in that carbon blacks from a heavy oil gasification or partial combustion are used as catalysts.

2. Process according to Claim 1, characterized in that the carbon blacks are obtained from the gasification or partial combustion of the residue arising in the hydrogenation.

3. Process according to Claim 1, characterized in that the carbon blacks are obtained from the gasification or partial combustion of the hot waste sludge.

4. Process according to one of Claims 1 to 3, characterized in that the carbon blacks are activated with, for example, CO, $CO_2$ or $H_2O$ at temperatures above 200°C.

5. Process according to one of Claims 1 to 4, characterized in that the carbon blacks contain, as catalytically active metal compounds compounds of one or more of the elements titanium chromium iron, cobalt, nickel, zinc, tin and lead.

6. Process according to one of Claims 1 to 5, characterized in that the carbon blacks contain 0.1 to 10 % by weight of metal compounds.

**Revendications**

1. Procédé pour l'hydrogénation d'huile lourde, bitume ou similaires, à des températures comprises entre 250 et 550°C, de préférence entre 380 et 480°C, et à des pressions comprises entre 5000 et 70000 kPa, de préférence entre 10000 et 32500 kPa, en présence de 0,1 à 10 % en poids d'un catalyseur perdu, carboné, contenant éventuellement un sel métallique à action catalytique, dans une hydrogénation en phase liquide ou en phases liquide et gazeuse combinées, et séparation dans un séparateur à chaud ou dans un système de plusieurs séparateurs raccordés en série, en produits de réaction sous forme de gaz et de vapeurs, ainsi que produit de départ n'ayant pas réagi, asphalte, catalyseurs, qui sont séparés avec une certaine fraction d'huiles lourdes et d'huiles moyennes, sous forme de boue résiduelle de séparateur à chaud, à des températures se situant jusqu'à 100°C, de préférence 20 à 40°C au-dessous de la température de réaction, caractérisé en ce que l'on utilise en tant que catalyseurs des noirs de carbone provenant d'une gazéification ou d'une combustion partielle d'huile lourde.

2. Procédé selon la revendication 1, caractérisé en ce que les noirs de carbone sont recueillis à partir de la gazéification ou de la combustion partielle du résidu provenant de l'hydrogénation.

3. Procédé selon la revendication 1, caractérisé en ce que les noirs de carbone sont recueillis lors de la gazéification ou de la combustion partielle de la boue résiduelle du séparateur à chaud.

4. Procédé selon l'une quelconque des revendications 1 à 3, caractérisé en ce que l'on active les noirs de carbone, par exemple avec CO, $CO_2$, $H_2O$ à des températures supérieures à 200°C.

5. Procédé selon l'une quelconque des revendications 1 à 4, caractérisé en ce que les noirs de carbone contiennent, en tant que composés métalliques à action catalytique, ceux à base d'un ou plusieurs des éléments titane, chrome, fer, cobalt, nickel, zinc, étain et plomb.

6. Procédé selon l'une quelconque des revendications 1 à 5, caractérisé en ce que les noirs de carbone contiennent 0,1 à 10 % en poids de composés métalliques.